# EUROPEAN PATENT SPECIFICATION

(11) **EP 3 960 954 B1**
(45) Date of publication and mention of the grant of the patent: **01.05.2024**
(21) Application number: 21159016.1
(22) Date of filing: 24.02.2021
(51) Int. Cl.: E04F 13/18, E04F 13/00, E04F 15/16, D06N 7/00, D06N 3/00, B32B 27/36, B32B 5/02, E04F 13/08, B32B 27/12, B44C 5/04, B32B 7/12, B32B 27/08

(54) **DECORATIVE PANEL COMPRISING AN ELASTIC FABRIC FOR THE DECORATION OF SURFACES**
DEKORATIVE PLATTE MIT EINEM ELASTISCHEN GEWEBE FÜR DIE DEKORATION VON OBERFLÄCHEN
PANNEAU DÉCORATIF COMPRENANT UN TISSU ÉLASTIQUE POUR LA DÉCORATION DE SURFACES

(30) Priority: 25.02.2020 IT 202000003907
(43) Date of publication of application: 02.03.2022
(73) Proprietor: Tecnografica S.pA., 42014 Castellarano (RE) (IT)
(72) Inventor: LAMBERTI, Paolo, 42014 Castellarano (RE) (IT)
(74) Representative: Grana, Daniele

(56) References cited:
- EP-A1- 2 969 562
- EP-A1- 3 587 700
- WO-A1-2019/146603
- US-A- 3 962 510
- E. HAUG ET AL: "Industrial Design and Analysis of Structural Membranes", INTERNATIONAL JOURNAL OF SPACE STRUCTURES, vol. 24, no. 4, 1 December 2009 (2009-12-01), pages 191-204, XP055749593, ISSN: 0266-3511, DOI: 10.1260/026635109789968227

## Description

### Technical Field

The present invention relates to a decorative panel usable for the decoration of surfaces such as walls or the like, or generally, as a material suitable for ennobling surfaces.

### Background Art

With reference to the sector of interior decoration, the use is well known of large-size decorative panels of different materials and with different patterns, for example to simulate marble and natural stones.

Commonly, such decorative panels can be combined as decorative elements with ceramic wall tiles of the conventional type.

The need is also known to search for new technologies that allow the realization of aesthetically new decorative products, which are able to attract the attention of customers and meet their needs in terms of aesthetic effects on the environment in which they are placed.

The decorative panels of known type do, however, have some drawbacks.

First of all, the decorative panels of known type are usually rigid and, therefore, not suitable for the decoration of curved surfaces, such as e.g. columns or walls with curved shapes.

In addition, the shipping costs of the panels of known type are generally not negligible, particularly in the case where the supply consists of a few large-size panels. In such a case, in fact, the shipping cost of the traditional panels can far exceed the cost of the panels themselves.

A further drawback is that the materials generally used to make the panels of known type do not allow obtaining an effective diffuse backlighting.

Another drawback is that the laying techniques traditionally used do not always allow for an effective and durable fixing of the panels of known type to the wall.

A further drawback is that the set of the materials used to make the panels of known type does not always allow carrying out the cutting on site of the panels themselves in order to obtain the desired size, or it does not allow carrying out a simple drilling with traditional carpenter's tools.

Another drawback is that the panels of known type do not always have reduced thickness and weight, such as to allow their use inside existing frames or for decorations on boats, where the weight and technical characteristics are a main component.

A decorative panel for the decoration of surfaces of the known type is also disclosed in documents EP3587700A1 and EP2969562A1.

Document WO 2019/146603 A1 discloses a decorative laminate comprising a transparent film, a coating layer constituted of a rigid resin material disposed over a first surface of the transparent film, a shielding layer disposed over a second surface of the transparent film, and a printed layer interposed between the coating layer and the shielding layer, wherein the thickness of the shielding layer is 10 µm or more and 300 µm or less.

### Description of the Invention

The main aim of the present invention is to devise a decorative panel for the decoration of surfaces having a high flexibility, such that it is made suitable for the decoration of curved surfaces, such as e.g. columns or walls having curved shapes.

Another object of the present invention is to devise a decorative panel for the decoration of surfaces that allows considerably reducing the shipping costs.

Another object of the present invention is to devise a decorative panel for the decoration of surfaces that allows providing an effective diffuse backlighting.

Another object of the present invention is to devise a decorative panel for the decoration of surfaces capable of ensuring an effective and durable attachment to the wall.

Another object of the present invention is to devise a decorative panel for the decoration of surfaces that can be cut on site in order to obtain the desired size and/or that can be drilled with simple carpenter's tools.

Another object of the present invention is to devise a decorative panel for the decoration of surfaces having minimal thickness and reduced weight.

The foregoing objects are achieved by the present decorative panel for the decoration of surfaces according to claim 1.

### Brief Description of the Drawings

Other characteristics and advantages of the present invention will become more evident from the description of a preferred, but not exclusive, embodiment of a decorative panel for the decoration of surfaces, illustrated by way of an indicative, yet non-limiting example, in the accompanying tables of drawings wherein:

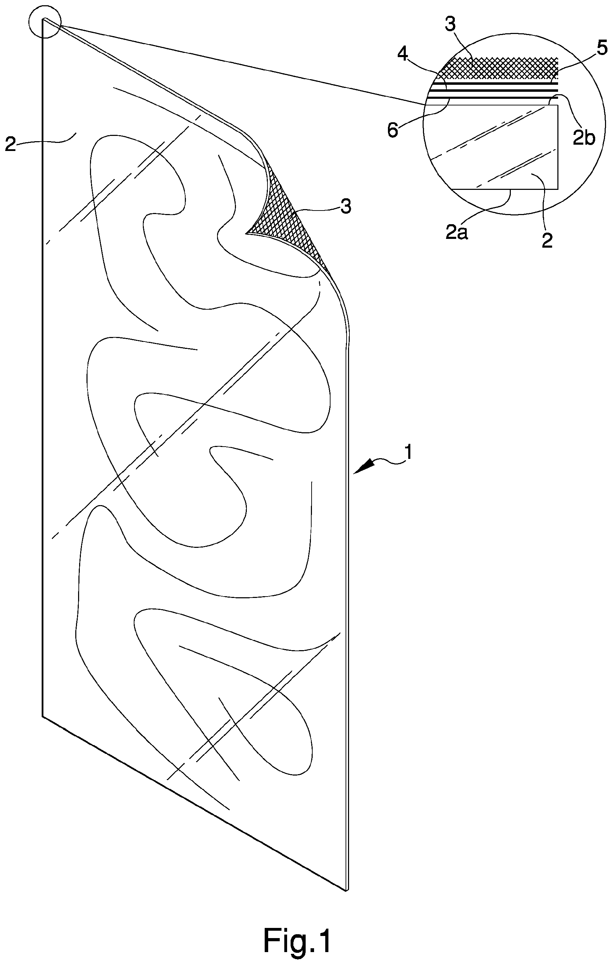

Figure 1 is an axonometric view of a possible embodiment of the decorative panel according to the invention;

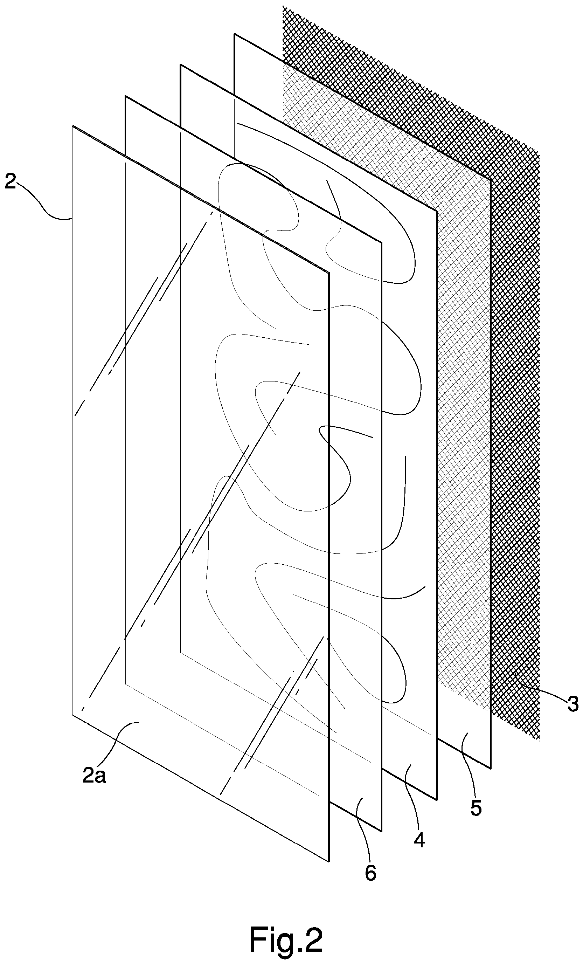

Figure 2 is an axonometric and exploded view of the decorative panel according to the invention in Figure 1;
Figures 3 and 4 show possible applications of the decorative panel according to the invention.

### Embodiments of the Invention

With particular reference to such figures, reference numeral 1 globally indicates a decorative panel for the decoration of surfaces.

Specifically, the decorative panel 1 according to the invention comprises a panel of low thickness which can be made in large sizes (up to 1500 x 3000 mm) composed of a series of layers of material that make it adapted to be used in the decoration of walls or as a material adapted to ennoble the surfaces.

The decorative panel 1 comprises:
- at least one slab 2 made of flexible polymeric material provided with and/or associated with at least one decorative element 4;
- at least one layer of technical elastic fabric 3 associated with at least one portion of a face of the slab 2 and adapted to be fixed by gluing to a surface to be decorated.

In particular, according to a preferred embodiment illustrated in the figures, the decorative panel 1 comprises a single slab 2 provided with a first face 2a intended to be outwardly facing, after the decorative panel 1 has been attached to a surface to be decorated, and a second face 2b intended to be facing towards the surface to be decorated.

According to a first, preferred embodiment, shown in the figures, the decorative element 4 is composed of a decorative film associated with the slab 2 and comprising at least one print of a decoration.

According to the invention, the slab 2 is made of transparent polymeric material and the decorative film 4 is attached to the second face 2b of the slab 2, so as to be visible through the first face 2a, after the decorative panel 1 has been attached to the surface to be decorated.

Preferably, the decorative film 4 covers the entire surface of the second face 2b of the slab 2.

Different embodiments of the decorative panel 1 and, specifically, of the decorative element cannot however be ruled out.

For example, according to a further possible embodiment, the decorative element comprises at least one print of a decoration made directly on at least one portion of said slab 2.

In such a case, the printing may be made directly on the second face 2b of the slab 2.

According to a further possible embodiment of the decorative panel 1, the decorative element may be composed of at least one coloured portion of the slab 2 itself. For example, the slab 2 may be made entirely of flexible, coloured polymeric material.

Preferably, the layer of technical elastic fabric 3 completely covers the second face 2b of the slab 2.

With reference to the first possible and preferred embodiment, shown in the figures, the layer of technical elastic fabric 3 is attached to the decorative film 4. Preferably, the layer of technical elastic fabric 3 completely covers the decorative film 4 and, therefore, the second face 2b of the slab 2.

In particular, the decorative panel 1 comprises a first adhesive layer 5 positioned between the decorative film 4 and the layer of elastic fabric 3, for the attachment of the layer of elastic fabric itself.

In addition, the decorative panel 1 comprises a second adhesive layer 6 positioned between the second face 2b of the slab 2 and the decorative film 4, for the attachment of the decorative film itself.

According to a preferred embodiment, at least one of the first adhesive layer 5 and the second adhesive layer 6 is composed of at least one thermoplastic film. Different embodiments cannot however be ruled out wherein, for example, at least one of either the first adhesive layer 5 or the second adhesive layer 6 is made of a high-strength glue or a double-sided adhesive.

According to the invention, the slab 2 is made at least partly of polycarbonate.

Preferably, the slab 2 is made entirely of flexible, transparent and light-permeable polycarbonate.

According to the invention, the slab 2 has a thickness comprised between 2 mm and 6 mm.

Preferably, the slab 2 made of polymeric material has a thickness of 2 mm. This allows the creation of a decorative panel 1 that is, at the same time, flexible, durable and permeable to light.

Additionally, again according to a preferred embodiment, the decorative film 4 comprises a printable polyester film.

According to the invention, the slab 2 made of flexible polymeric material is transparent.

The slab 2 ensures effective protection of the decorative film, and at the same time, the transparency and permeability to light of the polymeric material used allow the print to effectively stand out on the decorative film 4.

Conveniently, the decorative film 4 is permeable to light.

In addition, the decorative film 4 is water resistant.

Also according to a preferred embodiment, the layer of technical elastic fabric 3 comprises glass fiber.

The elasticity of the layer of technical fabric 3, therefore, ensures optimal flexibility of the entire panel 1. At the same time, the layer of technical fabric 3 ensures an optimal grip on the wall to be decorated after it has been attached by gluing.

It has in practice been ascertained that the described invention achieves the intended objects.

In particular, the fact is emphasized that the invention consists in having made, by means of the coupling of materials with specific technical characteristics, a new large-size decorative panel having the features listed below.

First of all, the panel according to the invention has an extreme flexibility that makes it suitable for the decoration of curved surfaces, such as e.g. columns or walls with curved shapes.

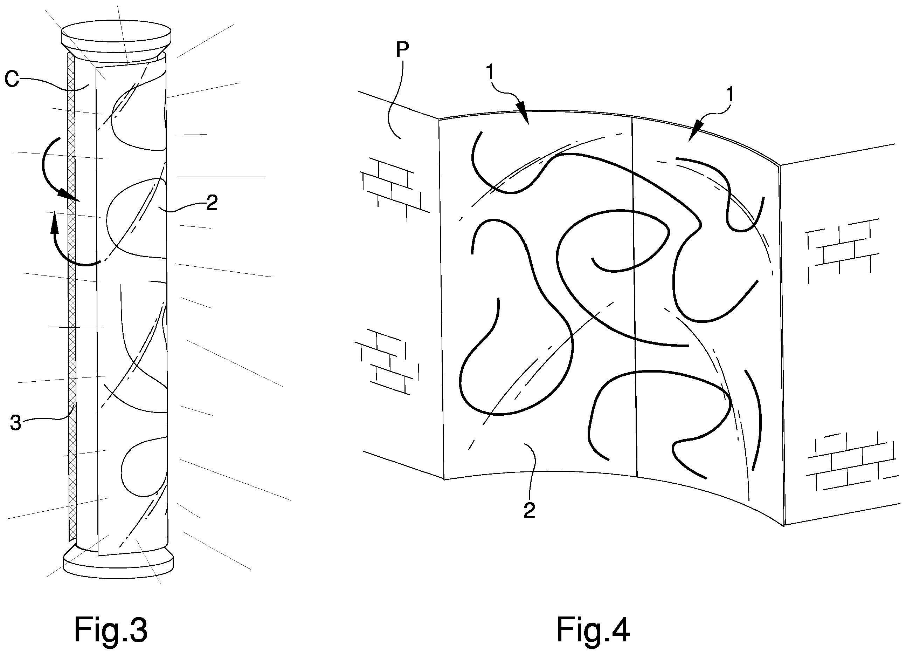

Figures 3 and 4 show possible applications of the decorative panel according to the invention, on a column C and on a curved wall P, respectively.

Moreover, such flexibility allows the panel to be rolled up, even if it is large, inside a circular tube, thus considerably reducing the shipping costs. In this regard, the saving is even more evident in the case where the supply consists of a few panels, where the shipping cost of traditional panels (therefore impossible to roll up) would far exceed the cost of the slabs themselves.

Another advantage is the fact that the special materials of which the decorative panel is made allow a light placed in the rear portion of the slab itself to diffuse and, therefore, to obtain a diffuse backlighting.

An additional advantage is that the special glass fiber mesh used in the rear portion of the slab allows for an optimal glue attachment and, therefore, an effective and long-lasting wall mounting.

In addition, another advantage is that the combination of materials used makes it possible to cut the slab on site in order to obtain the desired size or to drill it with simple carpenter's tools.

Not the least advantage is that with a significantly reduced thickness and with an extremely low weight, the decorative panel according to the invention can be placed inside existing frames without any problems. In addition, the decorative panel is particularly suitable for use on boats, where weight and technical characteristics are a key component.

## Claims

1. Decorative panel (1) for the decoration of surfaces, comprising:
- at least one slab (2) made of flexible polymeric material, transparent and permeable to light, made at least partly of polycarbonate and having a thickness comprised between 2 mm and 6 mm;
- at least one decorative element (4);
- at least one layer of technical elastic fabric (3) associated with at least one portion of said slab (2) and adapted to be fixed by gluing to a surface to be decorated;
wherein said decorative element (4) is provided between said slab (2) and said technical elastic fabric (3), and wherein said decorative panel (1) is flexible enough to be rolled up.

2. Decorative panel (1) according to claim 1, **characterized by** the fact that said decorative element (4) comprises at least one decorative film (4) associated with said slab (2) and comprising at least one print of a decoration.

3. Decorative panel (1) according to claim 2, **characterized by** the fact that said decorative film (4) is fixed on one face (2b) of said slab (2).

4. Decorative panel (1) according to claim 3, **characterized by** the fact that said decorative film (4) covers the entire surface of said face (2a) of said slab (2).

5. Decorative panel (1) according to one or more of claims 3 and 4, **characterized by** the fact that it comprises at least one adhesive layer (6) positioned between said face of the slab (2) and said decorative film (4).

6. Decorative panel (1) according to one or more of the preceding claims, **characterized by** the fact that said decorative element comprises at least one print of a decoration made directly on at least one portion of said slab (2).

7. Decorative panel (1) according to one or more of the preceding claims, **characterized by** the fact that said decorative element comprises at least one coloured portion of said slab (2).

8. Decorative panel (1) according to one or more of the preceding claims, **characterized by** the fact that said layer of technical elastic fabric (3) completely covers at least one face (2b) of the slab (2).

9. Decorative panel (1) according to one or more of the preceding claims, **characterized by** the fact that it comprises at least one adhesive layer (5) positioned between said slab (2) and said layer of elastic textile.

10. Decorative panel (1) according to one or more of the preceding claims, **characterized by** the fact that said slab (2) has a thickness of 2 mm.

11. Decorative panel (1) according to one or more of the preceding claims, **characterized by** the fact that said layer of technical elastic fabric (3) comprises glass fiber.

12. Decorative panel (1) according to one or more of the preceding claims, **characterized by** the fact that said decorative film (4) comprises a printable polyester film.

13. Decorative panel (1) according to one or more of the claims 2-11, **characterized by** the fact that said decorative film (4) is permeable to light.

## Patentansprüche

1. Dekoratives Panel (1) zur Dekoration von Oberflächen, umfassend:
- mindestens eine Platte (2) aus flexiblem, transparentem und lichtdurchlässigem Polymermaterial, die zumindest teilweise aus Polycarbonat gefertigt ist und eine Dicke zwischen 2 mm und 6 mm aufweist;
- mindestens ein dekoratives Element (4);
- mindestens eine Schicht aus technischem elastischem Gewebe (3), die mit mindestens einem Bereich der Platte (2) verbunden und ausgebildet ist, durch Kleben auf einer zu dekorierenden Oberfläche befestigt zu werden;
wobei das dekorative Element (4) zwischen der Platte (2) und dem technischen elastischen Gewebe (3) vorgesehen ist, und wobei das dekorative Panel (1) flexibel genug ist, um aufgerollt zu werden.

2. Dekoratives Panel (1) nach Anspruch 1, **dadurch gekennzeichnet, dass** das dekorative Element (4) mindestens eine dekorative Folie (4) umfasst, die mit der Platte (2) verbunden ist und mindestens einen Druck eines Dekors umfasst.

3. Dekoratives Panel (1) nach Anspruch 2, **dadurch gekennzeichnet, dass** die dekorative Folie (4) auf einer Seite (2b) der Platte (2) befestigt ist.

4. Dekoratives Panel (1) nach Anspruch 3, **dadurch gekennzeichnet, dass** die dekorative Folie (4) die gesamte Oberfläche der Seite (2a) der Platte (2) bedeckt.

5. Dekoratives Panel (1) nach einem oder mehreren der Ansprüche 3 und 4, **dadurch gekennzeichnet, dass** es mindestens eine Klebeschicht (6) umfasst, die zwischen der Seite der Platte (2) und der dekorativen Folie (4) angeordnet ist.

6. Dekoratives Panel (1) nach einem oder mehreren der vorhergehenden Ansprüche, **dadurch gekennzeichnet, dass** das dekorative Element mindestens einen Druck eines Dekors umfasst, der direkt auf mindestens einem Bereich der Platte (2) angebracht ist.

7. Dekoratives Panel (1) nach einem oder mehreren der vorhergehenden Ansprüche, **dadurch gekennzeichnet, dass** das dekorative Element mindestens einen farbigen Bereich der Platte (2) umfasst.

8. Dekoratives Panel (1) nach einem oder mehreren der vorhergehenden Ansprüche, **dadurch gekennzeichnet, dass** die Schicht aus technischem elastischem Gewebe (3) mindestens eine Seite (2b) der Platte (2) vollständig bedeckt.

9. Dekoratives Panel (1) nach einem oder mehreren der vorhergehenden Ansprüche, **dadurch gekennzeichnet, dass** es mindestens eine Klebeschicht (5) umfasst, die zwischen der Platte (2) und der Schicht aus elastischem Gewebe angeordnet ist.

10. Dekoratives Panel (1) nach einem oder mehreren der vorangehenden Ansprüche, **dadurch gekennzeichnet, dass** die Platte (2) eine Dicke von 2 mm aufweist.

11. Dekoratives Panel (1) nach einem oder mehreren der vorhergehenden Ansprüche, **dadurch gekennzeichnet, dass** die Schicht aus technischem elastischem Gewebe (3) Glasfasern umfasst.

12. Dekoratives Panel (1) nach einem oder mehreren der vorhergehenden Ansprüche, **dadurch gekennzeichnet, dass** die dekorative Folie (4) eine bedruckbare Polyesterfolie umfasst.

13. Dekoratives Panel (1) nach einem oder mehreren der Ansprüche 2-11, **dadurch gekennzeichnet, dass** die dekorative Folie (4) für Licht durchlässig ist.

## Revendications

1. - Panneau décoratif (1) pour la décoration de surfaces, comprenant :
- au moins une dalle (2) faite de matière polymère souple, transparente et perméable à la lumière, faite au moins en partie de polycarbonate et ayant une épaisseur comprise entre 2 mm et 6 mm ;
- au moins un élément décoratif (4) ;
- au moins une couche de tissu élastique technique (3) associée à au moins une partie de ladite dalle (2) et apte à être fixée par collage à une surface à décorer ;
ledit élément décoratif (4) étant disposé entre ladite dalle (2) et ledit tissu élastique technique (3), et ledit panneau décoratif (1) étant suffisamment souple pour être enroulé.

2. - Panneau décoratif (1) selon la revendication 1, **caractérisé par le fait que** ledit élément décoratif (4) comprend au moins un film décoratif (4) associé à ladite dalle (2) et comprenant au moins une impression d'une décoration.

3. - Panneau décoratif (1) selon la revendication 2, **caractérisé par le fait que** ledit film décoratif (4) est fixé sur une face (2b) de ladite dalle (2).

4. - Panneau décoratif (1) selon la revendication 3, **caractérisé par le fait que** ledit film décoratif (4) recouvre toute la surface de ladite face (2a) de ladite dalle (2).

5. - Panneau décoratif (1) selon une ou plusieurs des revendications 3 et 4, **caractérisé par le fait qu'**il comprend au moins une couche adhésive (6) positionnée entre ladite face de la dalle (2) et ledit film décoratif (4).

6. - Panneau décoratif (1) selon une ou plusieurs des revendications précédentes, **caractérisé par le fait que** ledit élément décoratif comprend au moins une impression d'une décoration réalisée directement sur au moins une partie de ladite dalle (2).

7. - Panneau décoratif (1) selon une ou plusieurs des revendications précédentes, **caractérisé par le fait que** ledit élément décoratif comprend au moins une partie colorée de ladite dalle (2).

8. - Panneau décoratif (1) selon une ou plusieurs des revendications précédentes, **caractérisé par le fait que** ladite couche de tissu élastique technique (3) recouvre entièrement au moins une face (2b) de la dalle (2).

9. - Panneau décoratif (1) selon une ou plusieurs des revendications précédentes, **caractérisé par le fait qu'**il comprend au moins une couche adhésive (5) positionnée entre ladite dalle (2) et ladite couche de tissu élastique.

10. - Panneau décoratif (1) selon une ou plusieurs des revendications précédentes, **caractérisé par le fait que** ladite dalle (2) a une épaisseur de 2 mm.

11. - Panneau décoratif (1) selon une ou plusieurs des revendications précédentes, **caractérisé par le fait que** ladite couche de tissu élastique technique (3) comprend de la fibre de verre.

12. - Panneau décoratif (1) selon une ou plusieurs des revendications précédentes, **caractérisé par le fait que** ledit film décoratif (4) comprend un film polyester imprimable.

13. - Panneau décoratif (1) selon une ou plusieurs des revendications 2 à 11, **caractérisé par le fait que** ledit film décoratif (4) est perméable à la lumière.
